# EUROPÄISCHE PATENTSCHRIFT

(11) **EP 0 903 075 B1**
(45) Veröffentlichungstag und Bekanntmachung des Hinweises auf die Patenterteilung: **31.03.2004**
(21) Anmeldenummer: 98117039.2
(22) Anmeldetag: 09.09.1998
(51) Int. Cl.: A01D 34/86

(54) **Mähgerät**
Mowing device
Dispositif faucheur

(30) Priorität: 20.09.1997 DE 29716916 U
(43) Veröffentlichungstag der Anmeldung: 24.03.1999
(73) Patentinhaber: Gerhard Dücker GmbH & Co. KG Landmaschinenfabrik, 48703 Stadtlohn (DE)
(72) Erfinder: Dücker, Gerhard, D-48703 Stadtlohn (DE)
(74) Vertreter: Busse & Busse Patentanwälte

(56) Entgegenhaltungen:
- AU-B- 507 369
- DE-B- 1 135 233
- FR-A- 1 366 395
- FR-A- 2 722 363
- GB-A- 1 180 645
- NL-A- 6 600 424
- US-A- 4 104 851
- US-A- 4 573 306
- US-A- 5 425 224

## Beschreibung

Die Erfindung bezieht sich auf ein Mähgerät nach dem Oberbegriff des Anspruches 1.

Ein derartiges Mähgerät ist aus der DE 297 03 498 U1 bekannt. Insbesondere wenn Mähgeräte dieser Art zur Pflege von Straßenrändern eingesetzt werden und an einem vorderen Ausleger eines Fahrzeuges angeordnet sind, stellt sich das Problem, auftretenden Hindernissen, wie etwa Leitpfosten, automatisiert ausweichen zu müssen, ohne daß das Fahrzeug, an dem das Mähgerät angeordnet ist, seine Fahrtrichtung oder -geschwindigkeit ändert.

Hierzu ist bereits bekannt, daß ein Mähkopf eines Auslegers mit einem Tastorgan versehen ist und insgesamt bei Auftreffen des Tastorgans auf ein Hindernis verschwenkt. Diese Ausführung hat jedoch die Nachteile, daß einerseits durch das Verschwenken des Mähkopfes ein großer Bereich um das Hindernis ungemäht bleibt, zudem wird in der verschwenkten Lage, in der der Mähkopf am Hindernis vorbeigeführt wird, auch im Bereich unterhalb des Mähkopfes ein unbefriedigendes Ergebnis erzielt, andererseits kann auch die Geschwindigkeit des Fahrzeuges insgesamt nur sehr langsam sein, so daß die Effektivität der Bodenbearbeitung gering ist.

Des weiteren sind aus der GB-A-1 180 645 und der AU 507 369 B nicht gattungsgemäße Mähgeräte bekannt, die keine horizontalen Mähwalzen, sondern sogenannte Kreiselmäher als Mähwerkzeuge aufweisen. Hierbei wird versucht die oben dargestellten Probleme dadurch zu lösen, daß die Mähgeräte ein Hauptmähwerk und ein Auslegermähwerk aufweisen, wobei das Auslegermähwerk um eine vertikale Achse angetrieben verschwenkbar ausgebildet ist. Diese Mähgeräte funktionieren im allgemeinen zufriedenstellend. Wird jedoch die Schwenkbewegung des Auslegermähwerks in Einzelfällen trotz eines Hindernisses von dem Antrieb nicht eingeleitet, kann es zu Beschädigungen des Mähgerätes oder des Hindernisses kommen.

Der Erfindung liegt das Problem zugrunde, ein Mähgerät dieser Art dahingehend zu verbessern, daß diese Nachteile vermieden werden.

Die Erfindung löst dieses Problem mit den Merkmalen des Anspruchs 1. Hinsichtlich weiterer vorteilhafter Ausgestaltungen wird auf die Ansprüche 2 bis 16 verwiesen.

Durch die spezielle Ausgestaltung des Auslegermähwerks, das um eine zweite vertikale Achse des Schwenkarms verschwenkbar ist und durch ein Stellelement, beispielsweise eine Feder, in einer vorderen Anschlagstellung gehalten wird, kann das Auslegermähwerk Hindernisen, z.B. Steinen oder Abschrägungen im Boden, auch dann ausweichen, wenn durch den Antrieb um die erste vertikale Achse keine Ausweichbewegung eingeleitet wurde. Auch wird dadurch eine sehr gute Ummähung des Hindernisses bewirkt, ohne daß das Mähgerät stoppen oder seine Geschwindigkeit verlangsamen muß. Beschädigungen werden auf beiden Seiten auch dann vermieden, wenn die Hindernisse von einem vorzugsweise vorgelagertem Tastorgan nicht erkannt worden sind.

Durch die Ausbildung eines gegenüber dem Hauptmähwerk verschwenkbaren Auslegermähwerks kann bei Erreichen eines Hindernisses dieses Auslegermähwerk verschwenkt werden, ohne daß das Hauptmähwerk in seiner Funktion beeinträchtigt wird. Vielmehr wird die hier rotierende Walze geradlinig weiter vorwärts verfahren und kann eng an dem Hindernis vorbeigeführt werden. Der Schnitt unterhalb des Hauptmähwerkes ist daher vom Verschwenken des Auslegermähwerkes nicht beeinträchtigt. Das Auslegermähwerk kann unmittelbar hinter dem Hindernis wieder in seine Ausgangslage zurückschwenken, so daß der ungemähte Nahbereich um das Hindernis auf ein Minimum reduziert werden kann. Durch den unbeeindruckten Geradeauslauf des Hauptmähwerks kann die Fahrzeuggeschwindigkeit gegenüber bisherigen Ausführungen erheblich erhöht werden; die beim Verschwenken bewegte Masse ist erheblich verringert, das Verschwenken kann schneller durchgeführt werden.

Wenn das Auslegermähwerk zusätzlich um eine horizontale Achse schwenkbar ist, ist auch ein vertikales Ausweichen des Auslegermähwerks ermöglicht, so daß auch im Bereich von Bodenwellen zufriedenstellende Mähergebnisse erreicht werden können.

Bei Ausbildung eines zweites Tastorgangs, das dem Hauptmähwerk vorgelagert ist und bei Anprall an ein Hindernis eine seitliche Verlagerung des Hauptmähwerks bewirkt, kann auch bei Fehlansteuerung von beispielsweise Leitpfosten die Gefahr einer Beschädigung dieser Hindernisse vermieden werden. Dabei wird gegebenenfalls das Hauptmähwerk so weit einwärts verfahren, bis das zweite Tastorgan in Kontakt mit dem Hindernis gerät und das Verschwenken des Auslegermähwerks betätigt.

Weitere Vorteile und Merkmale ergeben sich aus in der Zeichnung dargestellten Ausführungsbeispielen des Gegenstandes der Erfindung.

In der Zeichnung zeigt:
- Fig. 1: ein erfindungsgemäßes Mähgerät in Draufsicht,
- Fig. 2: einen Schaltplan der hydraulischen Beaufschlagung der Stellelemente des Mähgeräts,
- Fig. 3 bis Fig. 8: eine schematische Draufsicht auf das Mähgerät bei Passieren eines Leitpfostens,
- Fig. 9 bis Fig. 12: eine ähnliche Ansicht wie Fig. 5 bis Fig. 8 mit eingezeichneten Stellelementen des Mähgeräts,
- Fig. 13: das Mähgerät bei Annäherung an ein niedriges, unterhalb der Tastorgane liegendes Hindernis in Draufsicht,
- Fig. 14: das Mähgerät nach Fig. 13 in Seitenansicht,
- Fig. 15: eine ähnliche Ansicht wie Fig. 13 bei Überfahren des Hindernisses,
- Fig. 16: das Mähgerät nach Fig. 15 in Seitenansicht,
- Fig. 17: das Mähgerät bei Auftreffen auf ein bodennahes Hindernis,
- Fig. 18: eine ähnliche Ansicht wie Fig. 17 bei Passieren dieses Hindernisses.

Im einzelnen weist das Mähgerät 1 ein Hauptmähwerk 2 und ein hieran schwenkbeweglich abgestütztes Auslegermähwerk 3 auf. Das Hauptmähwerk 2 enthält zumindest eine horizontale, quer zur Fahrtrichtung 4 angeordnete Rotationswalze, über deren Umfang Schneidkörper angeordnet sind. Auch können in dem Hauptmähwerk zwei oder mehr Mähwalzen dieser Art hinter- und/oder nebeneinander angeordnet sein. Die Rotationswalze(n) ist bzw. sind von einem Antrieb 5, beispielsweise einem hydraulisch betätigten Antrieb, angetrieben. Das Auslegermähwerk 3 enthält ebenfalls zumindest eine Rotationswalze, die axial zur Längsausdehnung des Auslegermähwerks 3 angeordnet ist und von einem Antrieb 6 antreibbar ist.

Das Auslegermähwerk 3 ist an dem Hauptmähwerk 2 um eine vertikale Achse 7 schwenkbar angeordnet. Damit kann das Auslegermähwerk 3 einem in Fahrtrichtung befindlichen Hindernis 8 durch Schwenkbewegung ausweichen.

Dem Hauptmähwerk 2 ist ein seitlich an diesem angeordnetes Tastorgan 9 zugeordnet, das als um eine ebenfalls vertikale Drehachse 10 schwenkbarer Bügel ausgebildet ist und bei Auftreffen auf ein Hindernis 8 um die Drehachse 10 verschwenkt werden kann. Die Drehachse 10 ist an einem Schwenkarm 13 mitbeweglich angeordnet, der das Hauptmähwerk 2 mit dem Auslegermähwerk 3 verbindet. Bei Umschwenkung des Bügels 9 um die Drehachse 10 betätigt dieser ein ebenfalls mit dem Schwenkarm 13 bewegliches Ventil 11, das die Beaufschlagung eines Steuerzylinders 12 mit Druckmittel, beispielsweise Hydrauliköl, betätigt. Der Steuerzylinder 12 ist einenends mit dem Hauptmähwerk 2 und anderenends mit dem Schwenkarm 13 verbunden. Dieser wird daher durch Ein- und Ausfahrbewegung des Steuerzylinders 12 um die erste vertikale Schwenkachse 7 verschwenkt. An seinem der Schwenkachse 7 abgewandten Ende ist der Schwenkarm 13 über eine auslegerseitige zweite Schwenkachse 14 mit dem Auslegermähwerk 3 verbunden, das um die zweite Schwenkachse 14 antriebsfrei schwenkbar ist. Statt der antriebsfreien Schwenkbarkeit um die zweite Schwenkachse 14 könnte hier auch ein Steuermechanismus vorgesehen sein, der je nach Anforderungen einen Schwenkwinkel α zwischen dem Auslegermähwerk 3 und dem Schwenkarm 13 einstellt.

In Normalstellung ist das Auslegermähwerk 3 gegenüber dem Schwenkarm 13 durch die Kraft eines Stellelementes, hier einer Feder 15, in einem konstanten Schwenkwinkel α gehalten. Diese Winkelstellung stellt eine vordere Anschlagstellung für das Auslegermähwerk 3 dar, aus der heraus es im Sinne eines sich öffnenden Winkels α' (Fig. 18) nach hinten verschwenkt werden kann.

Der Schwenkarm 3 ist zusätzlich zu seiner vertikalen Verschwenkbarkeit um die Schwenkachse 7 gegenüber dem Hauptmähwerk auch um eine horizontale Schwenkachse 16 verschwenkbar, so daß auch eine aufwärts gerichtete Schwenkbewegung des Schwenkarmes 13 mit dem daran befindlichen Auslegermähwerk 3 möglich ist. Im Normalbetrieb ist das Auslegermähwerk 3 mit dem Schwenkarm 13 durch deren Gewichtskraft in einer unteren Extremposition gehalten, in der der Schwenkarm 3 auf einer Gleit- oder Rollschiene 17 des Hauptmähwerks 2 aufliegt. Diese Schiene 17, die als Auflage für den Schwenkarm 3 dient, kann einen Aufpralldämpfer, beispielsweise durch Gummielemente, enthalten.

Im normalen Betriebszustand des Mähwerkes 1 ist das Auslegermähwerk 3 in einer um den Winkel β gegenüber der Achse einer Mähwalze des Hauptmähwerks 2 versetzten Lage gehalten, wobei der Winkel β einen spitzen Winkel darstellt, so daß die Achsen einer im Hauptmähwerk befindlichen und einer im Auslegermähwerk befindlichen Mähwalze nahezu parallel liegen, bzw. in einem Winkel von wenigen bis wenigen 10° gegeneinander versetzt sind. Durch diese einwärts geneigte Stellung des Auslegermähwerks 3 gegenüber der Achse einer Walze des Hauptmähwerks 2 wird bei Auftreffen auf ein Hindernis 8 der vordere Nahbereich an dem Hindernis in einem einwärts geneigten Schnitt während des Verschwenkens des Auslegermähwerks 3 gründlicher bearbeitet, als wenn die Achsen des Hauptmähwerks und des Auslegermähwerks 3 zueinander parallel stünden. Weiterhin ist das als Bügel 9 ausgebildete Tastorgan über eine Vorspanneinheit 20 an einem Endanschlag 19 gehalten, so daß der Bügel 9 eine maximal ausgeschwenkte Stellung gegenüber dem Hauptmähwerk 2 einnimmt.

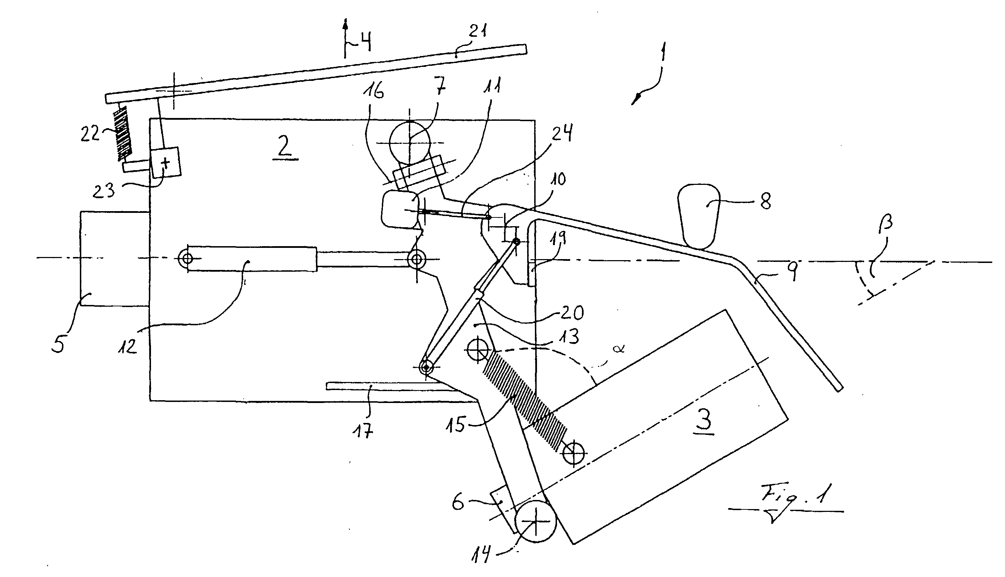

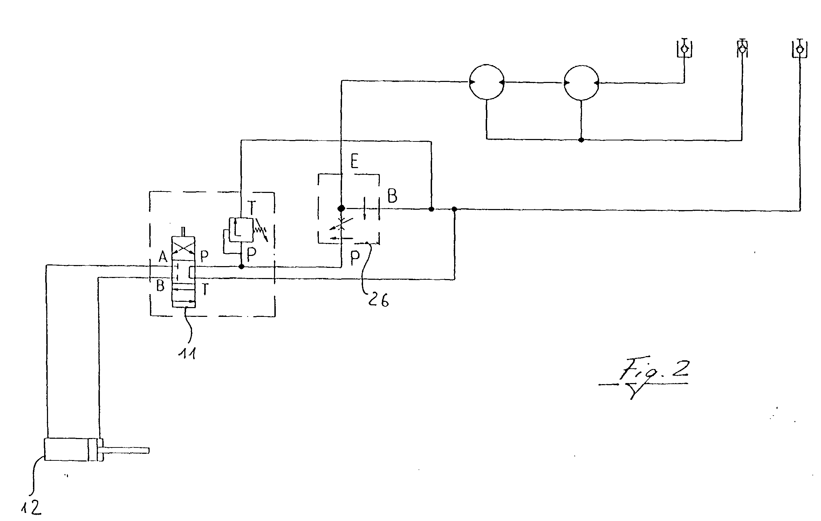

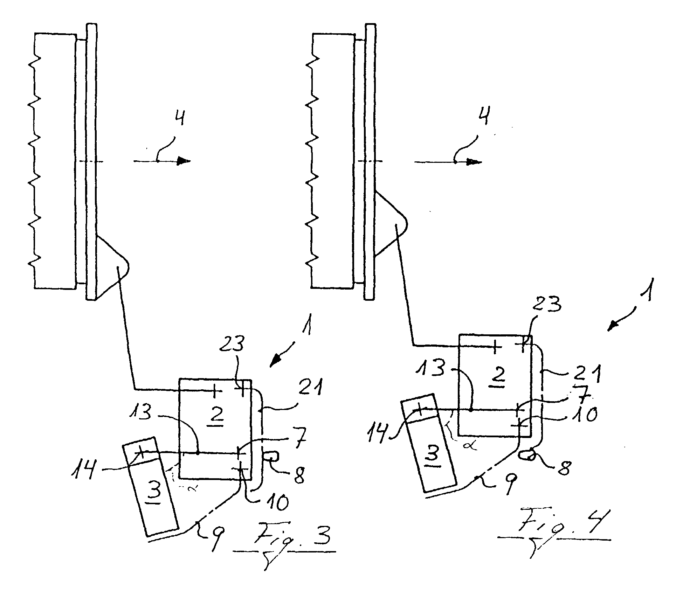

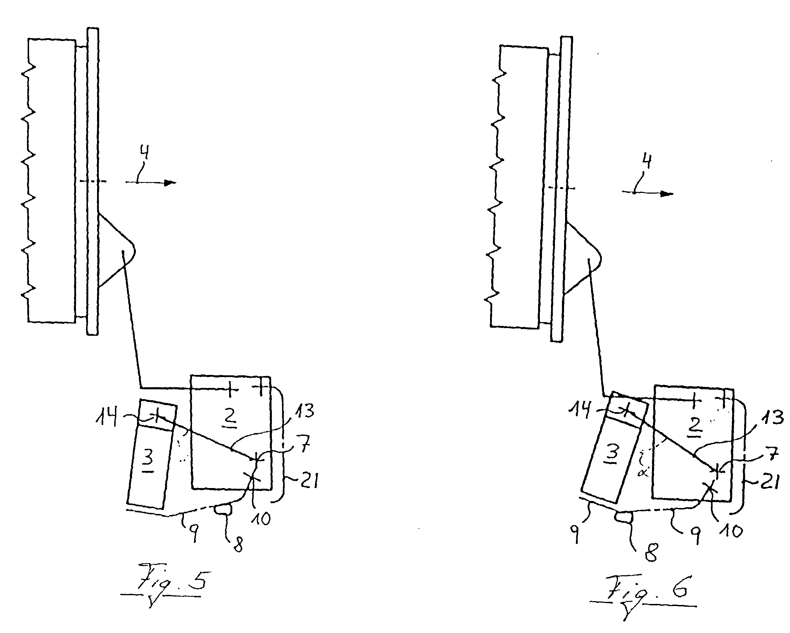

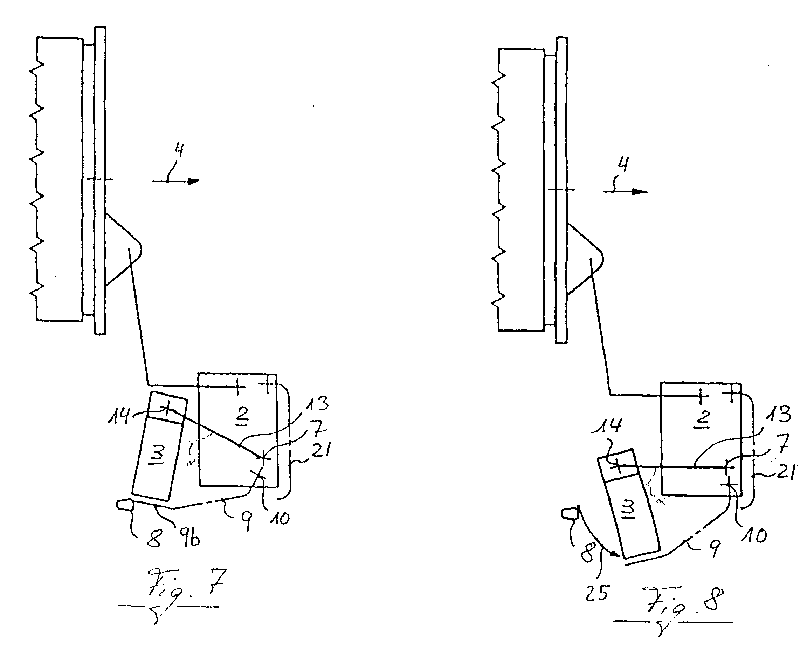

Das Hauptmähwerk 2 ist im Ausführungsbeispiel zusätzlich mit einem zweiten Tastorgan 21 ausgestattet, das dem Hauptmähwerk 2 in Fahrtrichtung 4 vorgelagert ist und über eine Feder 22 in einer ausgefahrenen Position gehalten wird. Bei Anprall des zweiten Tastorgans 21 (Fig. 3) wird dieses um einen Drehpunkt 23 gegen die Kraft der Feder 22 einwärts verschwenkt, wodurch gleichzeitig ein Steuerelement, beispielsweise ein Hydraulikzylinder, betätigt wird, der eine seitliche Verlagerung quer zur Fahrtrichtung 4 des Hauptmähwerks 2 bewirkt (Fig. 4) - so weit, bis das Hindernis seitlich an dem Bügel 21 vorbeilaufen kann und dieser daher in seine Ausgangsposition zurückschwenkt. Durch die Einwärtsverlagerung des Mähwerkes 1 ist daher das Hauptmähwerk 2 dem Hindernis ausgewichen, so daß dieses nun (Fig. 4, Fig. 5) gegen das erste Tastorgan 9, das dem Auslegermähwerk 3 vorgelagert ist, treffen kann.

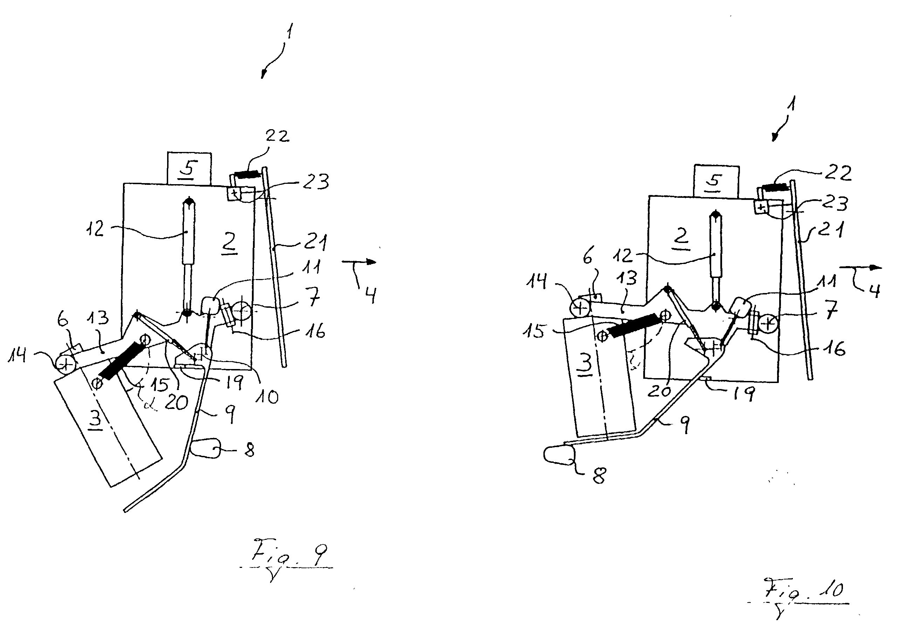

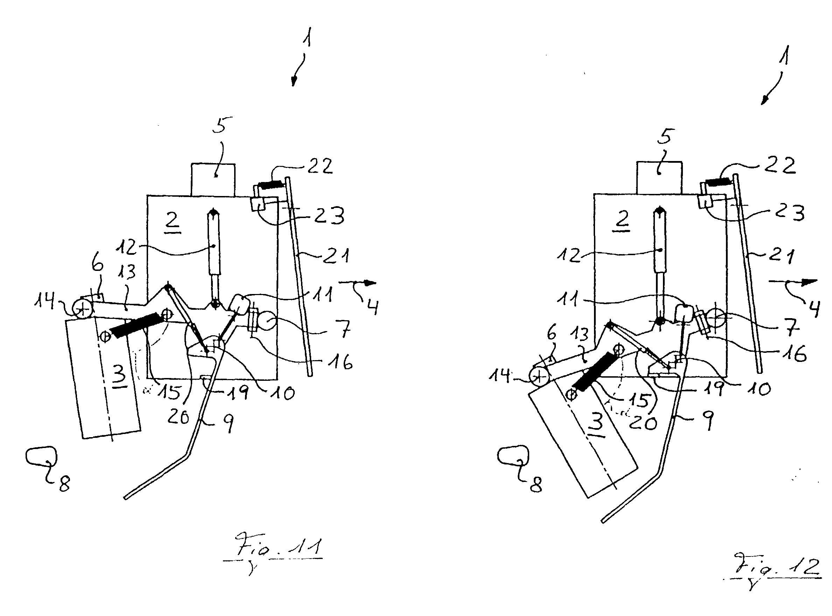

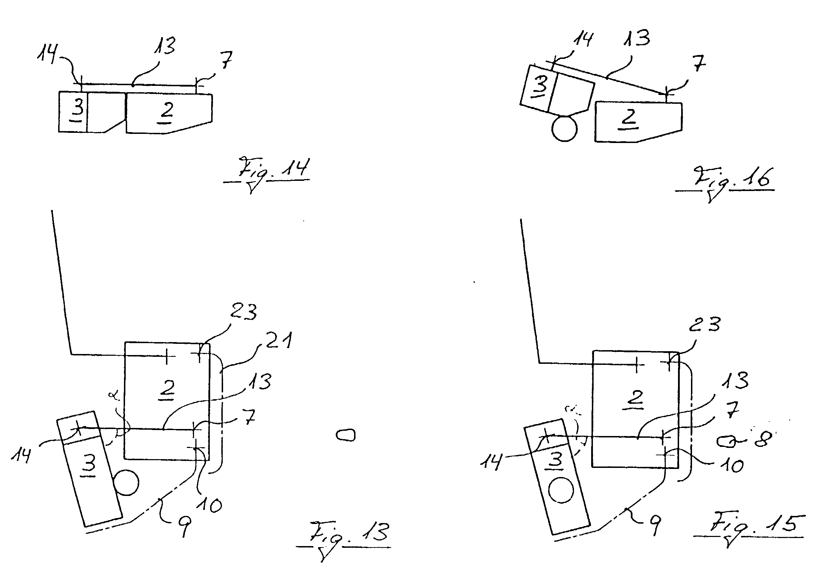

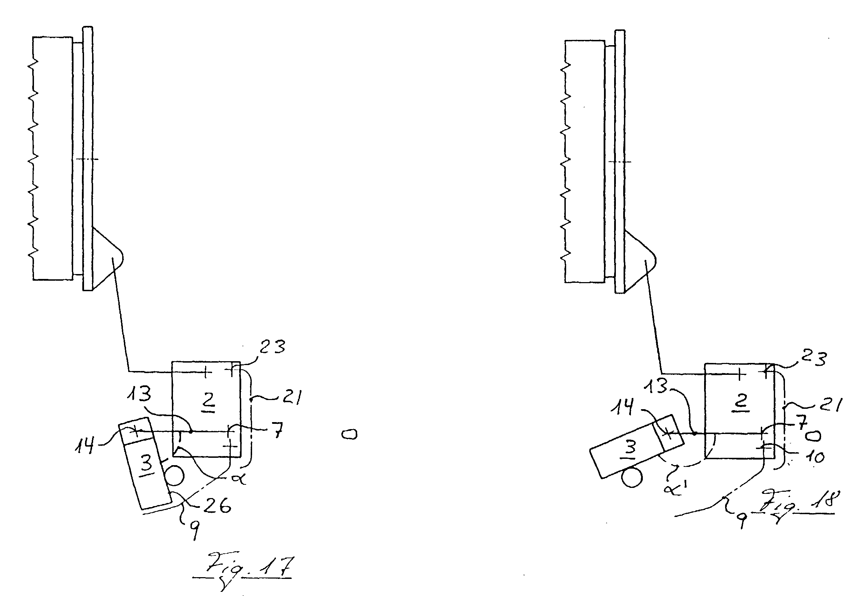

Bei Anprall des Bügels 9 auf das Hindernis 8 wird dieser gegen seine Vorspanneinheit 20 um den Drehpunkt 10, der auf dem Schwenkarm 13 gelagert ist, nach hinten verschwenkt, wobei über beispielsweise eine Steuerstange 24 - oder auch über eine Nocken- oder andere Steuerung - das Hydraulikventil 11 betätigt wird, wodurch der Steuerzylinder 12 mit Druckmittel beaufschlagt wird, so daß der Schwenkarm 13 in eine eingeschwenkte Position gebracht wird, in der das Auslegermähwerk 3 aus seiner schräg seitlich gegenüber dem Hauptmähwerk 2 befindlichen Position in eine hinter dem Hauptmähwerk 2 gelegene Stellung verbracht wird (Fig. 5). Bei weiterem Druck auf den Bügel 9 wird dieser weiter einwärts verschwenkt und bewirkt dabei ein weiteres Einwärtsverschwenken des Schwenkarms 13. Der Grad des Einschwenkens des Schwenkarms 13 um die vertikale Schwenkachse 7 ist abhängig von der Einschwenkstellung des Tastorgans 9 um die Drehachse 10. Je weiter daher das Tastorgan 9 eingeschwenkt wird, desto weiter wird auch der Schwenkarm 13 einschwenken. Es ist daher möglich, wenn das Auslegermähwerk 3 schließlich in die in Fig. 6 gezeigte extreme Schwenkposition gelangt, das Hindernis 8 unmittelbar neben dem äußeren Randbereich des Hauptmähwerks 2 zu passieren. Der Winkel β zwischen den Achsen der Mähwalzen des Hauptmähwerks 2 und des Auslegermähwerks 3 kehrt dabei sein Vorzeichen um, so daß das Auslegermähwerk 3 nach Vorbeifahrt an dem Hindernis (Fig. 7) in seiner Mährichtung nach außen gewandt ist und dadurch unmittelbar hinter dem Hindernis (Fig. 7) eine nach außen laufende Mähbewegung vollführt, die bereits einsetzt, sobald der Bügel 9 in einem einwärts gebogenen Endbereich 9b noch in Kontakt mit dem Hindernis 8 steht. Die extrem einwärts geschwenkte Lage des Auslegermähwerks gemäß Fig. 6 wird daher nur unmittelbar während der Vorbeifahrt des Auslegermähwerkes 3 an dem Hindernis 8 eingenommen. Der Endbereich 9b des Bügels 9 verläuft parallel zur Außenkante des Auslegermähwerkes 3 und befindet sich unmittelbar neben diesem, so daß auch seitlich des Hindernisses 8 nur ein minimaler nicht gemähter Streifen verbleibt. Sobald der Endbereich 9b des Tastorgans 9 den Kontakt mit dem Hindernis 8 verliert (Fig. 7 bis Fig. 8) wird durch das Vorspannelement 20 eine beschleunigte Rückschwenkbewegung des Auslegers 9 um den Drehpunkt 10 eingeleitet, der das Hydraulikventil zur Rückschwenkung des Schwenkarmes 13 betätigt, so daß der Schwenkarm 13 unmittelbar hinter dem Hindernis 8 eine Rückschwenkung des Auslegermähwerkes 3 bewirkt. Der Winkel β nimmt hierbei wieder sein positives Vorzeichen ein, wobei das Auslegermähwerk 3 eine Kurvenbahn etwa entlang dem Pfeil 25 beschreibt und dabei den dem Hindernis 8 unmittelbar nachgeordneten Bereich entlang dieser Kurvenbahn abmäht, so daß hier kein Schattenbereich von nicht gemähtem Gras verbleibt. Während der ganzen Vorbeifahrt des Auslegermähwerks 3 an dem Hindernis 8 gemäß den Figuren 5 bis 8 bleibt der Schwenkwinkel α des Auslegermähwerks 3 gegenüber dem Schwenkarm 13 konstant.

Wenn ein Hindernis von dem Tastorgan beispielsweise überlaufen wird und an die Vorderkante 26 des Auslegermähwerks 3 anprallt, so kann dieses entgegen der Kraft der Zugfeder 15 auswärts verschwenkt werden, so daß der Winkel α zu einem vergrößerten Winkel α' gemäß Fig. 18 geöffnet wird und die Fahrt des Mähgerätes 1 nicht unterbrochen werden muß. Eine Beschädigung des Auslegermähwerkes 3 wird auch dabei vermieden.

Auch bei Auftreten von Bodenunebenheiten oder anderen bodennahen Hindernissen oder auch bei schrägen Böschungen kann gemäß den Figuren 13 bis 16 ein Ausweichen des Auslegermähwerkes 3 durch Verschwenken um eine horizontale Achse 16 stattfinden, wobei der Schwenkarm 13 gegen diese horizontale Achse angehoben werden kann und somit die Bodenunebenheit oder ein bodennahes Hindernis von dem Auslegermähwerk 3 überfahren werden kann (Fig. 16). Nach Überfahren des Hindernisses schwenkt dann der Schwenkarm 13 mit dem Auslegermähwerk 3 durch deren Gewichtskräfte wieder in die Ausgangslage zurück und kann dabei auf die Anschlagschiene 17 auftreffen. Die Mähwalzen sind stabile Schürzen vor- und nachgeordnet, die für eine Abweisung von kleinen Gegenständen sorgen bzw. ein Aufwirbeln von Steinen oder ähnlichem durch die Mähwalzen verhindern.

Zur Steuerung des Schwenk- und Antriebsmechanismus des Mähgerätes 1 ist ein Hydrauliksystem gemäß Fig. 2 vorgesehen, das die Antriebseinheiten 5,6 der Mähwalzen mit vollem Hydraulikdruck beaufschlagt, wobei an dem Hauptmähwerk 2 weiterhin ein Mengenteiler 26 vorgesehen ist, der das Ventil 11 zur Ansteuerung des Steuerzylinders 12, der die Schwenkbewegung des Schwenkarmes 13 bewirkt, mit vermindertem Druck beaufschlagt. Der Steuerzylinder 12 ist dabei in beide Richtungen antreibbar, so daß sowohl das Ausschwenken als auch das Einschwenken des Schwenkarmes 13 von diesem Steuerzylinder 12 bewirkt werden.

Ein mit einem erfindungsgemäßen Mähgerät ausgestattetes Fahrzeug zum Mähen einer Bankette kann mit gegenüber bekannten Fahrzeugen dieser Art etwa verdoppelter Geschwindigkeit gefahren werden.

Ein besonders gutes Mähergebnis ist bei einer hohen Mähgeschwindigkeit erzielbar, wenn das Mähgerät mit Mähwalzen versehen ist, die gemäß der deutschen Gebrauchsmusteranmeldung 297 03 498.7 ausgebildet sind. Dabei sind jeweils auf der Vorder- und Rückseite von schräg zur jeweiligen Mähwalze stehenden Tragkörpern gegeneinander versetzte Schneidstücke, die sich über Teilsegmente der Tragkörper erstrecken, angeordnet.

## Patentansprüche

1. Mähgerät (1), insbesondere an einem vorderen Ausleger eines Fahrzeuges angeordnetes Bankettenmähgerät, mit zumindest einer im Betrieb rotierenden horizontalen Mähwalze, über deren Umfang Schneidkörper angeordnet sind, **dadurch gekennzeichnet, daß** das Mähgerät ein zumindest eine erste Mähwalze umfaßendes Hauptmähwerk (2) und ein gegenüber diesem um eine erste vertikale Achse (7) über einen Antrieb (12) schwenkbares Auslegermähwerk (3) umfaßt und ein Schwenkarm (13) einen Außenbereich des Hauptmähgerätes (2) mit einem im Normalbetrieb dem Hauptmähgerät (2) zugewandten Endbereich des Auslegermähwerks (3) verbindet und daß, das Auslegermähwerk (3) schwenkbeweglich um eine zweite vertikale Achse (14) an dem Schwenkarm (13) angeordnet und um diese entweder antriebsfrei drehbar ist, wobei das Auslegermähwerk (3) durch ein Stellelement (15) in einer definierten Schwenkposition um die auslegerseitige zweite Schwenkachse (14), insbesondere in einer vorderen Anschlagstellung, gehalten ist oder die Schwenkbarkeit des Auslegermähwerks (3) um die zweite Schwenkachse (14) über einen Steuermechanismus regulierbar ist.

2. Mähgerät nach Anspruch 1, **dadurch gekennzeichnet, daß** die erste vertikale Schwenkachse (7) dem Hauptmähwerk (2) zugeordnet ist.

3. Mähgerät nach Anspruch 2, **dadurch gekennzeichnet, daß** die zweite Schwenkachse (14) dem Auslegemähwerk (3) zugeordnet ist.

4. Mähgerät nach einem der Ansprüche 1 bis 3, **dadurch gekennzeichnet, daß** der Schwenkarm (13) um eine der ersten vertikalen Schwenkachse (7) benachbarte horizontale Achse (16) aufwärts schwenkbar ist.

5. Mähgerät nach Anspruch 4, **dadurch gekennzeichnet, daß** die Aufwärtsverschwenkung des Schwenkarmes (13) und des an diesem gehaltenen Auslegermähwerks (3) oberhalb einer unteren Anschlagstellung frei erfolgt und das Auslegermähwerk durch Gewichtskraft in dieser unteren Anschlagstellung gehalten ist.

6. Mähgerät nach einem der Ansprüche 1 bis 5, **dadurch gekennzeichnet, daß** dem Hauptmähwerk (2) ein sich seitlich von diesem erstreckendes und dem Auslegermähwerk (3) vorgelagertes Tastorgan (9) zur Hinderniserkennung zugeordnet ist.

7. Mähgerät nach Anspruch 6, **dadurch gekennzeichnet, daß** das Tastorgan (9) bei Anprall an ein Hindernis (8) den Antrieb (12) für eine Schwenkbewegung des Auslegermähwerkes (3) betätigt.

8. Mähgerät nach Anspruch 6 oder 7, **dadurch gekennzeichnet, daß** das Tastorgan (9) von einem schwenkbar an dem Hauptmähgerät (2) angeordneten Bügel gebildet ist.

9. Mähgerät nach einem der Ansprüche 6 bis 8, **dadurch gekennzeichnet, daß** bei Anprall des Tastorgans (9) an ein Hindernis (8) die Schwenkbewegung des Auslegermähwerkes (3) um die erste vertikale Schwenkachse (7) betätigt wird und der Winkel (α) des Schwenkarms (13) zu dem Auslegermähwerk (3) konstant bleibt.

10. Mähgerät nach Anspruch 9, **dadurch gekennzeichnet, daß** bei Anprall des Auslegermähwerks (3) an ein Hindernis das Auslegermähwerk (3) dieses um die auslegerseitige zweite Vertikalschwenkachse (14) verschenkt und dabei die Lage des Schwenkarms (13) zum Hauptmähwerk (2) konstant bleibt.

11. Mähgerät nach einem der Ansprüche 6 bis 10, **gekennzeichnet durch** ein zweites, in Fahrtrichtung dem Hauptmähwerk (2) vorgelagertes Tastorgan (21).

12. Mähgerät nach Anspruch 11, **dadurch gekennzeichnet, daß** bei Anprall des zweiten Tastorgans (21) an ein Hindernis ein Antrieb zur seitlichen Einwärtsverlagerung des Hauptmähwerks (2) betätigt wird.

## Claims

1. Mowing device (1), in particular a road verge mowing device arranged on a front jib of a vehicle, with at least one horizontal mowing roller that rotates in operation, around the circumference of which cutting heads are arranged, **characterised in that** the mowing device comprises a main mowing unit (2) incorporating at least a first mowing roller and a jib mowing unit (3) that can be swivelled opposite this unit about a first vertical shaft (7) through a drive (12), **in that** a swivel arm (13) connects to an outer area of the main mowing unit (2) to an end area of the jib mowing unit (3) facing the main mowing device (2) in normal operation and **in that** the jib mowing unit (3) is arranged on the swivel arm (13) so that it is able to swivel about a second vertical shaft (14) and it can either be rotated about this shaft drive-free, in which case the jib mowing unit (3) is retained by an adjusting element (15) in a defined swivel position about the second swivel shaft (14) on the jib side, in particular in a front stop position, or the swivel capacity of the jib mowing unit (3) can be adjusted about the second swivel shaft (14) by a control mechanism.

2. Mowing device according to claim 1, **characterised in that** the first vertical swivel shaft (7) is assigned to the main mowing unit (2).

3. Mowing device according to claim 2, **characterised in that** the second swivel shaft (14) is assigned to the jib mowing unit (3).

4. Mowing device according to any one of claims 1 to 3, **characterised in that** the swivel arm (13) can be swivelled upwards about a horizontal shaft (16) adjacent to the first vertical swivel shaft (7).

5. Moving device according to claim 4, **characterised in that** the upward swivelling of the swivel arm (13) and the jib mowing unit (3) retained on it takes place freely above a lower stop position and the jib mowing unit is retained by gravity in this lower stop position.

6. Mowing device according to one of claims 1 to 5, **characterised in that** a sensing mechanism (9), extending laterally from the main mowing unit (2) and mounted in front of the jib mowing unit (3) is assigned to the main mowing unit (2) for detecting obstructions.

7. Mowing device according to claim 6, **characterised in that** the sensing mechanism (9), on impact with an obstruction (8), actuates the drive (12) for a swivel movement of the jib mowing unit (3).

8. Mowing device according to claim 6 or 7, **characterised in that** the sensing mechanism (9) is formed from a strap arranged so that it swivels on the main mowing device (2).

9. Mowing device according to any one of claims 6 to 8, **characterised in that** the swivel movement of the jib mowing unit (3) about the first vertical swivel shaft (7) is actuated on impact of the sensing mechanism (9) with an obstruction (8), and **in that** the angle (α) of the swivel arm (13) to the jib mowing unit (3) remains constant.

10. Mowing device according to claim 9, **characterised in that** on impact of the jib mowing unit (3) with an obstruction the jib mowing unit (3) swivels it about the second vertical swivel shaft (14) on the jib side, and that in this case the position of the swivel arm (13) remains constant relative to the main mowing unit (2).

11. Mowing device according to one of claims 6 to 10, **characterised by** a second sensing mechanism (21) arranged in front of the main mowing unit (2) in the direction of travel.

12. Mowing device according to claim 11, **characterised in that** on impact of the second sensing mechanism (21) with an obstruction a drive is actuated for lateral inward displacement of the main mowing unit (2).

## Revendications

1. Dispositif faucheur (1), en particulier dispositif faucheur d'accotements disposé sur un bras avant d'un véhicule, avec au moins un rouleau de coupe horizontal, tournant en cours de fonctionnement, sur la circonférence duquel sont disposés des organes de coupe, **caractérisé en ce que** le dispositif faucheur comprend une barre de coupe principale (2) comprenant au moins un rouleau de coupe et une barre de coupe en porte-à-faux (3) pouvant pivoter autour d'un premier axe vertical (7) par l'intermédiaire d'un dispositif d'entraînement (12) par rapport à la barre de coupe principale, et un bras pivotant (13) relie une zone extérieure du dispositif faucheur principal (2) à une zone d'extrémité de la barre de coupe en porte-à-faux (3), tournée vers le dispositif faucheur principal (2) en cours de fonctionnement normal, et **en ce que** la barre de coupe en porte-à-faux (3) est disposée sur le bras pivotant (13) de façon mobile en pivotement autour d'un deuxième axe vertical (14) et peut tourner sans dispositif d'entraînement autour dudit axe, la barre de coupe en porte-à-faux (3) étant maintenue par un élément de réglage (15) dans une position de pivotement définie autour du deuxième axe de pivotement (14) côté porte-à-faux, en particulier dans une position de butée avant, ou bien la capacité de la barre de coupe en porte-à-faux (3) à pivoter autour du deuxième axe de pivotement (14) est réglable par l'intermédiaire d'un mécanisme de commande.

2. Dispositif faucheur selon la revendication 1, **caractérisé en ce que** le premier axe de pivotement vertical (7) est associé à la barre de coupe principale (2).

3. Dispositif faucheur selon la revendication 2, **caractérisé en ce que** le deuxième axe de pivotement (14) est associé à la barre de coupe en porte-à-faux (3).

4. Dispositif faucheur selon l'une quelconque des revendications 1 à 3, **caractérisé en ce que** le bras pivotant (13) peut pivoter autour d'un axe horizontal (16) adjacent au premier axe de pivotement vertical (7).

5. Dispositif faucheur selon la revendication 4, **caractérisé en ce que** le pivotement vers le haut du bras pivotant (13) et de la barre de coupe en porte-à-faux (3) maintenue sur celui-ci s'effectue librement au-dessus d'une position de butée inférieure et la barre de coupe en porte-à-faux est maintenue dans cette position de butée inférieure par son poids.

6. Dispositif faucheur selon l'une quelconque des revendications 1 à 5, **caractérisé en ce qu'**un organe palpeur (9) destiné à la détection d'obstacle, placé devant la barre de coupe en porte-à-faux (3) et s'étendant latéralement à partir de la barre de coupe principale (2) est associé à celle-ci.

7. Dispositif faucheur selon la revendication 6, **caractérisé en ce qu'**en cas de collision contre un obstacle (8), l'organe palpeur (9) actionne le dispositif d'entraînement (12) pour un mouvement de pivotement de la barre de coupe en porte-à-faux (3).

8. Dispositif faucheur selon la revendication 6 ou 7, **caractérisé en ce que** l'organe palpeur (9) est formé par un étrier disposé de façon à pouvoir pivoter sur le dispositif faucheur principal (2).

9. Dispositif faucheur selon l'une quelconque des revendications 6 à 8, **caractérisé en ce qu'**en cas de collision de l'organe palpeur (9) contre un obstacle (8), le mouvement de pivotement de la barre de coupe en porte-à-faux (3) autour du premier axe de pivotement vertical (7) est actionné et l'angle (α) du bras pivotant (13) par rapport à la barre de coupe en porte-à-faux (3) reste constant.

10. Dispositif faucheur selon la revendication 9, **caractérisé en ce qu'**en cas de collision de la barre de coupe en porte-à-faux (3) contre un obstacle, la barre de coupe en porte-à-faux (3) fait pivoter celui-ci autour du deuxième axe de pivotement vertical (14) côté porte-à-faux et la position du bras pivotant (13) par rapport à la barre de coupe principale (2) reste alors constante.

11. Dispositif faucheur selon l'une quelconque des revendications 6 à 10, **caractérisé par** un deuxième organe palpeur (21) placé en amont de la barre de coupe principale (2) dans le sens de la marche.

12. Dispositif faucheur selon la revendication 11, **caractérisé en ce qu'**en cas de collision du deuxième organe palpeur (21) contre un obstacle, un dispositif d'entraînement est actionné pour un déplacement latéral vers l'intérieur de la barre de coupe principale (2).
